# EUROPÄISCHE PATENTANMELDUNG

(11) **EP 0 770 331 A1**
(43) Veröffentlichungstag der Anmeldung: **02.05.1997**
(21) Anmeldenummer: 96202946.8
(22) Anmeldetag: 22.10.1996
(51) Int. Cl.: A22C 11/00, A22C 13/00

(54) **Wurst**

(30) Priorität: 23.10.1995 DE 29516713 U; 25.01.1996 NL 1002177
(71) Anmelder: International Chemical Engineering Establishment, 9490 Vaduz (LI)
(72) Erfinder: Prohn, Othmar, 9470 Buchs (CH); Prohn, Machiel Wilhelm, 2051 EM Overveen (NL)
(74) Vertreter: Iemenschot, Johannes Andreas, Ir.

(57) **Zusammenfassung**

Eine Wurst besteht aus einem mit einer Masse befüllten Schlauch (3) mit verschlossenen Enden 5 und hat die Form eines Kringels. Der Schlauch (3) besteht aus Kunstdarm und der gefüllte Schlauch weist einen Durchmesser (d) auf, der größer ist als 2,0 und kleiner als 3,2 cm, und vorzugsweise zwischen 2,5 und 3,0 cm liegt. Der Kunstdarm ist verstreckt und ist dadurch schrumpffähig. Der Kunstdarm kann aus mehreren Schichten bestehen.

## Beschreibung

Die Erfindung betrifft eine Wurst, bestehend aus einem mit einer Masse befüllten Schlauch mit verschlossenen Enden, wobei die Wurst die Form eines Kringels hat.

Eine derartige Wurst ist aus z.B. DE-GM 94 06 403 bekannt. Bei dieser Wurst, die als Einmannportion hergestellt ist, hat der gefüllte kringelförmige Schlauch einen Durchmesser von 1,5 bis 2 cm. Diese Wurst ist jedoch wegen des kleinen Durchmessers des Schlauches nicht ökonomisch in großen Zahlen zu fertigen.

Würste der obengenannten Art wobei der Schlauch aus Kunstdarm besteht, sind auch bekannt. Jedoch deren Durchmesser ist größer als 3,2 cm. Diese Würste haben den Nachteil, daß sie nicht als Einmannportion hergestellt werden können.

Die Aufgabe der Erfindung ist eine Wurst die ökonomisch in Einmannportion hergestellt werden kann.

Diese Aufgabe wird dadurch gelöst, daß der Schlauch aus Kunstdarm besteht und der gefüllte Schlauch einen Durchmesser aufweist der größer ist als 2,0 cm und kleiner ist als 3,2 cm.

Würste gemäß der Erfindung können ökonomisch in großen Zahlen als Einmannportion hergestellt werden.

Die Erfindung betrifft auch einen gekränzten Kunstdarm geeignet für die Herstellung einer Wurst gemäß der Erfindung.

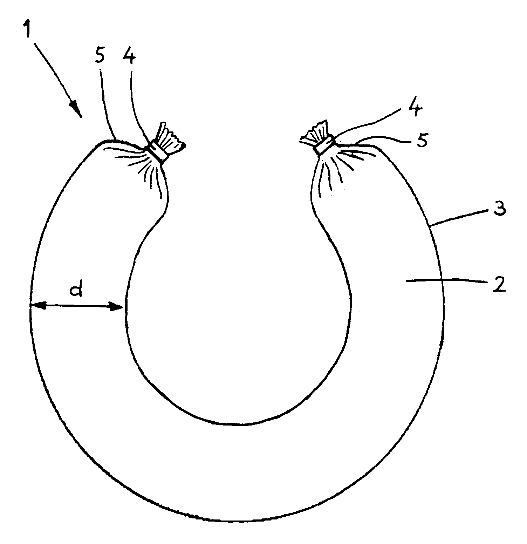

Ein Ausführungsbeispiel der Erfindung ist in der Zeichnung dargestellt und im folgenden näher beschrieben.

Die Wurst 1 gemäß der Erfindung besteht aus einem mit einer Masse 2 befüllten Schlauch 3 mit z.B. jeweils mit einem Klipp 4 verschlossenen Enden 5. Die Wurst 1 hat die Form eines Kringels. Die Enden 5 können durch eine (nicht gezeigte) Kordel mit einander verbunden sein.

Der Schlauch 3 besteht aus Kunstdarm, der zweckmäßig vor dem Füllen mit Wurstmasse gekränzt ist um die Kringelform zu erreichen. Der gefüllte Schlauch weist einen Durchmesser d auf, der größer ist als 2,0 cm und kleiner ist als 3,2 cm. Vorzugsweise liegt der Durchmesser d zwischen 2,5 und 3,0 cm.

Um eine gut geformte Wurst zu erreichen, wird für den Schlauch ein verstreckter und dadurch schrumpffähiger Kunstdarm verwendet.

Wenn der Kunstdarm aus mehreren Schichten besteht, wird eine sehr gute Dichtigkeit des Schlauches erreicht.

Die Wurst kann mit unterschiedlichen Massen befüllt sein, z.B. (Fleisch-)Wurstmasse, Käse oder andere Lebensmittel verschiedener Art.

## Patentansprüche

1. Wurst, bestehend aus einem mit einer Masse befüllten Schlauch mit verschlossenen Enden, wobei die Wurst die Form eines Kringels hat, dadurch gekennzeichnet daß der Schlauch (3) aus Kunstdarm besteht und der gefüllte Schlauch einen Durchmesser (d) aufweist, der größer ist als 2,0 cm und kleiner ist als 3,2 cm.

2. Wurst nach Anspruch 1, dadurch gekennzeichnet daß der Schlauchdurchmesser (d) zwischen 2,5 und 3,2 cm liegt.

3. Wurst nach Anspruch 1 oder 2, dadurch gekennzeichnet daß der Kunstdarm Schrumpfeigenschaften aufweist.

4. Wurst nach einem der Ansprüche 1 bis 3, dadurch gekennzeichnet daß der Kunstdarm verstreckt ist.

5. Wurst nach einem der Ansprüche 1 bis 4, dadurch gekennzeichnet daß der Kunstdarm aus einer oder mehreren Schichten besteht.

6. Gekränzter Kunstdarm geeignet für eine Wurst gemäß einem der Ansprüche 1 bis 5.
